# EUROPEAN PATENT APPLICATION

(11) **EP 1 067 784 A2**
(43) Date of publication of application: **10.01.2001**
(21) Application number: 00112485.8
(22) Date of filing: 13.06.2000
(51) Int. Cl.: H04N 5/445, G06F 3/023

(54) **Method of selecting alphanumeric characters using a display means**

(30) Priority: 29.06.1999 GB 9915036
(71) Applicant: Pace Micro Technology PLC, Saltaire, Shipley, BD18 3LF (GB)
(72) Inventor: Skilleter, John, c/o Pace Micro Technology Plc, Saltaire, Shipley, BD18 3LF (GB)
(74) Representative: Wood, Graham

(57) **Abstract**

An electrical apparatus having means for selecting alphanumeric characters or options via a display means. The electrical apparatus comprises a visual display means connected to the apparatus, which can be activated by remote control (2). The remote control (2) comprises a series of numbered buttons (4) and/or other buttons (6, 8) which allow selective control of the apparatus. The remote control (2) can be utilised to input text into the electrical apparatus in conjunction with the visual display, which is used to display alphanumeric characters selected by use of the remote control (2). A similar means can be used for the selection of a plurality of control functions or options of the electrical apparatus.

## Description

The invention which is the subject of this application is a method for selecting alphanumerical characters in electrical apparatus and in particular, a method of inputting text using a remote control device of the type commonly used in conjunction with electrical apparatus such as television sets, television signal receivers, personal computers, music systems to control the same and enter user selections.

Many types of electrical apparatus are now controlled by use of a remote control and in particular, television sets and the television signal receiving apparatus are controlled by a remote control which includes a number of buttons from zero to 9 and further buttons which control other functions of the apparatus such as on/off, volume, channel scrolling, colour, contrast and the like. Typically the numbered buttons are used to select particular channels so that for example button 1 in the UK is usually representative of BBC1, 2 is representative of BBC2, 3 representative of ITV, 4 representative of Channel 4, 5 representative of Channel 5, with a further button being allocated to allow viewing of channels received via a broadcast data receiver for a number of digital or analogue channels transmitted via any of satellite, cable or terrestrial channels and for which further channel numbers can be allocated or a separate remote control device may be provided. Another button is typically allocated in respect of an audio or video channel to allow viewing of matter received from video apparatus.

The use of a remote control is now standard and is accepted and understood by the majority of users. Increasingly however, features and facilities are provided in electrical apparatus such as television sets and broadcast data receivers which are additional to the conventional television programmes and channels. The additional services can be any of home banking, home shopping, e-mail, internet services and the like. To be able to use these facilities fully, there is an increasing need to be able to enter information which can be textual and/or numerical. One option is to use a conventional QWERTY keyboard but this can be bulky and requires a further item of apparatus to be provided for use.

The aim of the present invention is to provide a means whereby text and alphanumerical characters in general can be entered into electrical apparatus, such as a broadcast data receiver, using a remote control device and without the need for a full keyboard.

In a first aspect of the invention there is provided electrical apparatus comprising a display means which is connected to electrical apparatus which can be activated by remote control, said remote control comprising a series of numbered buttons and/or further buttons which allow selective control of the apparatus and wherein said remote control can be utilised to enter alphanumerical characters for display on the display means via the electrical apparatus, wherein a first depression of one of the buttons on the remote control causes the display on the screen of a number of segments, each segment including a plurality of letters, numbers and/or characters and an identifying number or character for each segment, the depression of the appropriate number on the remote control for the selected segment, causes the visual display to change to show the characters of the selected segment, each of the characters positioned in a sub-segment, and a number is allocated to each of the sub-segments so that subsequent depression of the appropriate number on the remote control causes the selection of the letter, number or character in said numbered sub-segment to appear on the display means.

It will be appreciated that in this manner each letter, number or character can be selected by use of a relatively small number of operations of the remote control buttons.

In an alternative, the device used need not be a remote control but has a remote control style of layout of operating buttons.

It is known to be able to select by using cursor keys, a letter or number or abstract character from a range which are displayed on screen but this can be time consuming and is prone to error as the user is required to move the cursor until they find a particular letter or number and then select that letter or number which requires a large number of operations of the remote control buttons.

In the current invention the system requires a relatively small number of operations of buttons regardless of the letter or numeral or character which is to be selected and can be used for password entry, composing e-mails, entering internet names, filling in name and address details etc.

In one embodiment keys on the remote control or remote control type keypad, other than those which are numbered can be used for text editing function such as for example, the use of arrow keys to move a cursor about text already entered, an OK key to end text entry and so on as appropriate.

In one embodiment, each display of segments is split into a number of segments which can be of any number as this can be selected by depression of the appropriate number or numbers on the remote control. It is envisaged that a display of 9 segments is particularly attractive and that each segment includes no more than 9 letters, numbers or characters so as to allow each segment, upon selection to be split into a display of 9 sub-segments.

In a further embodiment, instead of the selection of alphanumerical characters, each segment of the display can be used to indicate a range of options so that there is provided a first display of a series of segments, each segment including a range of selectable options whereupon selection of one segment, causes the display of the options in the segment, each option provided in a sub-segment whereupon the user can select of the options by depressing the appropriate identifier for the sub-segment in which the option is shown, via the remote control.

It should also be appreciated that this control system and use of the remote control need not be limited to the selection of alphanumeric characters but can be used to allow the selection of many different features which can be provided initially in a 1^{st} display of segments, a 2nd display of segments and 3^{rd}, 4^{th} and 5^{th} displays and so on as required.

A specific embodiment of the invention is now described with reference to the accompanying drawings, wherein:-
Figure 1 illustrates a first visual display generated as a result of the system;
Figure 2 illustrates a second visual display generated as part of the system; and
Figure 3 illustrates a conventional remote control device which can be used in conjunction with the system.

When a user wishes to enter text into an electrical apparatus which is provided with a visual display, they can use a remote control device 2 according to that shown in Figure 3 which comprises a series of buttons, which include a number of buttons 4 numbered from zero to 9, a button 6 which allows the text system to be implemented and a number of other buttons 8 which may be provided, to allow other facilities and operating parameters of the system to be controlled via the remote control. It is possible for some of these other buttons to also be used, for example to allow movement or alteration of the selection on the visual display.

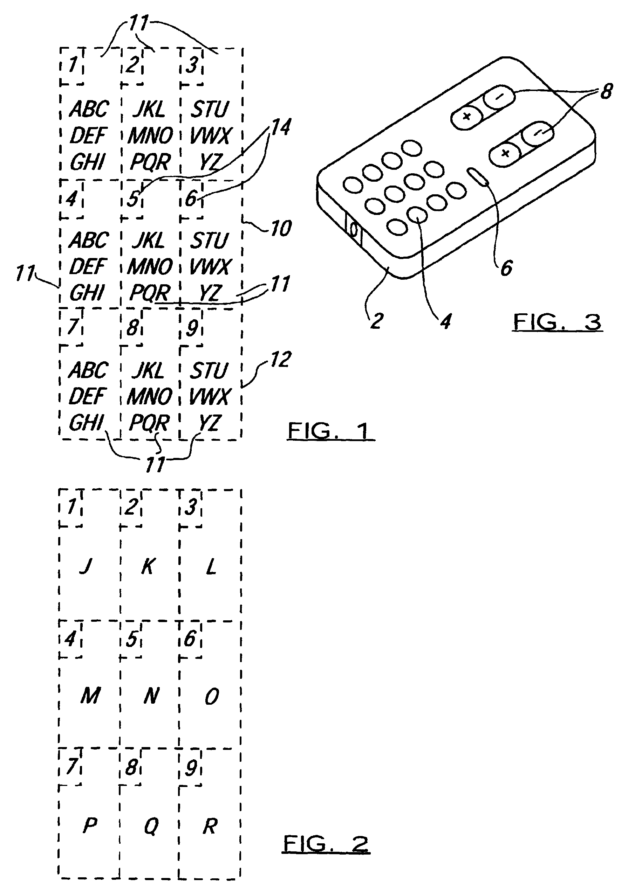

When the button 6 is pressed, a visual display is provided on the visual display screen and one embodiment of the display 10 is shown in Figure 1. Thus, if, for example, the user wishes to input the capital letter M, they depress an allocated button on the remote control to generate the segment display and then look at the visual display which comprises a series of segments 11 in a grid 12 and in each segment there is indicated a number of characters. Each segment is identified by a number such that, for example the segment with the number 1 has letters A to I, the segment indicated by the number 2 has letters J to R, and so on and then continues with small case letters, numbers or other characters through to segment 9. It should be appreciated that the same format need not be followed in each case and indeed the segments may not include letters, numbers or characters but may include questions, other options and the like. In any case, in this embodiment the user wishes to use the letter M and they will see that the letter M lies in the segment with the number 2. Each segment in the grid is labelled with the equivalent numeric key on the remote control as is shown 14 so that depression of the button number 2 on the remote control allows the selection of the segment 2. With the appropriate segment selected the user is shown the visual display shown in Figure 2 which is in effect a display of segment 2 from Figure 1 with each of the characters in that original segment placed into individual sub segments and each of the new sub-segments are provided with a number 1 through to 9. The user then selects the sub segment where the required character lies by pressing the appropriate number so that for example in this case the letter M lies in the sub segment with number 4 and the user presses the number 4 on the remote control. By doing this the letter M (large case) will be entered on the visual display and/or into memory in the apparatus and the process can be repeated for the subsequent letters, numbers and characters as required until the required character message has been completed.

A similar method as described above can be undertaken to edit text already displayed on the display screen. Arrow keys can be provided on the remote control to move a cursor on the display screen about text which has been previously entered. An "OK" key or acceptance can be provided on the remote control to confirm and end text entry. Furthermore a switch can be provided to switch the series of numbered buttons and/or other buttons between a text inputting function and one or more other functions.

Instead of the selection of alphanumeric characters, each segment of the display can be used to indicate a range of options so that there is provided a first display of a series of segments, each segment including a range of selectable options whereupon selection of one segment, causes the display of the options in that segment, each option provided in a sub-segment whereupon the user can select one of the options by depressing the appropriate identifier for the sub-segment in which the option is shown, via the remote control

Thus it will be appreciated that the present invention provides a means for inputting text into electrical apparatus without the need to provide a QWERTY keyboard and, if required, allows the use of a relatively conventional style remote control which has the advantage of being relatively small, and apparatus which the user of the electrical apparatus will already be familiar with.

## Claims

1. An electrical apparatus comprising a display means which is connected to electrical apparatus which can be activated by remote control (2), said remote control (2) comprising a series of numbered buttons (4) and/or further buttons (6, 8) which allow selective control of the apparatus, characterised in that said remote control (2) can be utilised to enter alphanumerical characters for display on the display means via the electrical apparatus, wherein a first depression of one of the buttons on the remote control (2) causes the display on the screen of a number of segments (11) , each segment (11) including a plurality of letters, numbers and/or characters and an identifying number or character for each segment (11), the depression of the appropriate number on the remote control (2) for the selected segment (11), causes the visual display to change to show the characters of the selected segment (11), each of the characters positioned in a sub-segment, and a number is allocated to each of the sub-segments so that subsequent depression of the appropriate number on the remote control (2) causes the selection of the letter, number or character in said numbered sub-segment to appear on the display means.

2. An electrical apparatus according to claim 1 characterised in that each of the numbered buttons (4) and/or other buttons (6, 8) correspond to a particular group of letters, numerals and/or abstract characters, and/or selectable options from a range of options.

3. An electrical apparatus according to claim 2 characterised in that activation of one of the series of numbered buttons (4) results in the visual display of the selected group of letters, numerals and/or abstract characters and/or options corresponding to the numbered button.

4. An electrical apparatus according to claim 3 characterised in that selection of one of the numbered buttons (4) results in the visual display of at least one of the letters, numerals and/or abstract characters and/or options corresponding to the numbered button (4) and/or other button (6, 8).

5. An electrical apparatus according to any preceding claim characterised the groups and/or subgroups corresponding to the numbered buttons (4) and/or other buttons (6, 8) are displayed in a grid format (12).

6. An electrical apparatus according to claim 3 characterised in that selection of one of the particular groups results in display of only one further subgroup.

7. An electrical apparatus having text inputting means, said electrical apparatus comprising a visual display means connected to the apparatus which can be activated by a remote control/phone type keypad, said keypad comprising a series of numbered buttons (4) and/or other buttons (6, 8) which allow selective control of the apparatus and characterised in that said key pad can be utilised to input text into the said electrical apparatus in conjunction with the visual display which is used to display letters and/or numerals and/or abstract characters selected by use of the key pad.

8. An electrical apparatus according to claim 1 characterised in that a switch means is provided to switch the series of numbered buttons (4) and/or other buttons (6, 8) between a text inputting function and one or more other functions.

9. An electrical apparatus according to claim 1 characterised in that the text inputting means includes a text editing function.

10. An electrical apparatus according to claim 9 characterised in that the text editing function includes arrow keys to move a cursor on the visual display about text previously entered.

11. An electrical apparatus according to claim 9 characterised in that an "OK" key is provided to confirm and end text entry.

12. An electrical apparatus according to claim 1 characterised in that each segment (11) corresponds to nine alphanumeric characters or options and there are nine segments displayed.

13. An electrical apparatus according to claim 12 characterised in that upon selection of one of the segments (11), a display of nine sub-segments is generated, one for each of the nine alphanumeric characters of options.

14. An electrical apparatus having function control means, said electrical apparatus comprising a visual display means connected to the apparatus which can be activated by a remote control/phone type keypad, said keypad comprising a series of numbered buttons (4) and/or other buttons (6, 8) which allow selective control of the apparatus and characterised in that each of the numbered buttons (4) and/or other buttons (6, 8) relate to a plurality of groups of functions of the said electrical apparatus for visual display, and selection of one of the numbered buttons (4) and/or other buttons (6, 8) causes the visual display to change to show at least one further subgroup of functions of the said electrical apparatus.

15. An electrical apparatus according to claim 15 characterised in that selection of a button relating to a final subgroup of functions results in that function being performed by the electrical apparatus.
